# EUROPÄISCHE PATENTSCHRIFT

(11) **EP 1 212 368 B1**
(45) Veröffentlichungstag und Bekanntmachung des Hinweises auf die Patenterteilung: **18.02.2004**
(21) Anmeldenummer: 00951474.6
(22) Anmeldetag: 01.08.2000
(51) Int. Cl.: C08F 36/04, C08F 279/02, C08C 19/44, C08F 4/48, C08F 4/52

(54) **VERFAHREN ZUM HERSTELLEN EINER LÖSUNG VON DIENPOLYMERISATEN IN VINYLAROMATISCHEN VERBINDUNGEN SOWIE ZUM HERSTELLEN VON SCHLAGZÄHEN VINYLAROMATISCHEN POLYMEREN DURCH POLYMERISATION DIESER LÖSUNG**
METHOD FOR PRODUCING A SOLUTION OF DIENE POLYMERS IN VINYL AROMATIC COMPOUNDS AND METHOD FOR PRODUCING RESISTANT VINYL AROMATIC POLYMERS BY POLYMERIZING THE SAME SOLUTION
PROCEDE POUR PREPARER UNE SOLUTION DE POLYMERES DE DIENES DANS DES COMPOSES AROMATIQUES VINYLIQUES ET POUR PRODUIRE DES POLYMERES AROMATIQUES VINYLIQUES RESISTANTS AUX CHOCS PAR POLYMERISATION DE CETTE SOLUTION

(30) Priorität: 04.08.1999 DE 19936566
(43) Veröffentlichungstag der Anmeldung: 12.06.2002
(73) Patentinhaber: BASF AKTIENGESELLSCHAFT, 67056 Ludwigshafen (DE)
(72) Erfinder: JÜNGLING, Stephan, D-68165 Mannheim (DE); GAUSEPOHL, Hermann, D-67112 Mutterstadt (DE); WARZELHAN, Volker, Singapore 257772 (SG)
(74) Vertreter: Isenbruck, Günter, Dr.
(86) Internationale Anmeldenummer: PCT/EP2000/007451
(87) Internationale Veröffentlichungsnummer: WO 2001/010917

(56) Entgegenhaltungen:
- WO-A-98/07766

## Beschreibung

Die Erfindung betrifft ein Verfahren zum Herstellen einer Lösung von Polymerisaten konjugierter Diene in vinylaromatischen Verbindungen, insbesondere Styrol oder substituierten Styrolen, sowie zum Herstellen von schlagzähen Polymeren vinylaromatischer Verbindungen, insbesondere von schlagzähem Polystyrol, durch Polymerisation dieser Lösung.

Es ist bekannt, schlagzähes Polystyrol (HIPS) durch katalytische Polymerisation einer Lösung herzustellen, die polymerisierte konjugierte Diene in Styrol oder substituierten Styrolen enthält.

In der DE-A 1770 392 wird die radikalische Polymerisation einer Lösung von 1 bis 14 Gew.-% eines kautschukartigen Polymerisats in einer vinylaromatischen polymerisierbaren Verbindung in mehreren Stufen bis zu einem Feststoffgehalt von mehr als 60 Gew.-% beschrieben. Dabei wird schließlich eine feste Dispersion von Kautschukteilchen in einer Polystyrol-Grundmasse erhalten. Dabei wird auch der Kautschuk in unterschiedlichem Maße durch Polystyrolketten gepfropft.

Die bei der Polymerisation eingesetzte Lösung wird durch Auflösen des kautschukartigen Dienpolymerisats in dem vinyl aromatischen Monomeren erhalten. Diese Arbeitsweise ist umständlich, da sie zunächst die Herstellung des Dienpolymerisats, dessen Aufarbeitung und Isolierung und nachfolgend die Auflösung in dem vinylaromatischen Monomeren erfordert. Eine Herstellung des schlagzähen vinylaromatischen Polymeren durch Polymerisation aus den Monomeren in einem Zug wäre wünschenswert.

In der EP-A 59231 wird die anionische Polymerisation von Butadien in Styrol als Lösemittel in Gegenwart von Alkyllithium als Katalysator beschrieben, wobei ein Styrol-Butadien-Kautschuk mit niedrigem Styrolgehalt erhalten wird. Nach Abbruch der Polymerisation wird das restliche monomere Butadien abgetrennt und das Styrol, gegebenenfalls nach Zusatz von weiteren Mengen dieses Monomeren, copolymerisiert, wobei schlagzähes Polystyrol erhalten wird. Bedingt durch die Relation der Copolymerisationsparameter von Butadien und Styrol in diesem System und die hohe Styrolkonzentration wird bereits bei einem Umsatz von 30% des Butadiens ein beträchtlicher Anteil an Styrol in das Polymere eingebaut, was eine unerwünschte Erhöhung der Glastemperatur der Kautschukphase in dem fertigen Produkt zur Folge hat. Die Reaktion kann zwar vor dem vollständigen Umsatz des Butadiens abgebrochen werden, dann muß aber das entstandene Polybutadien durch Fällung gereinigt oder aber das Lösemittel muß zusammen mit anderen flüchtigen Stoffen, insbesondere monomerem Butadien, abdestilliert werden.

In der WO 98/07765 wird die anionische Polymerisation oder Copolymerisation von Butadien in styrolischer Lösung in Gegenwart von gemischten Alkalimetallalkyl enthaltenden Katalysatoren beschrieben. Auch hier wird ein Copolymeres mit hohem Styrolgehalt erhalten.

Aufgabe der Erfindung war es, ein Verfahren zum Herstellen einer Lösung von hochmolekularen Polymerisaten konjugierter Diene in einem vinylaromatischen Kohlenwasserstoff vorzuschlagen, die ohne aufwendige Isolierungs- oder Trennmaßnahmen zur Herstellung von schlagzähen Polymerisaten des vinylaromatischen Kohlenwasserstoffs eingesetzt werden kann, die praktisch kein monomeres Dien und eine Polydienphase mit niedrigem Gehalt an Einheiten polymerisierter vinylaromatischer Verbindungen enthält.

Die Erfindung geht aus von einem Verfahren zum Herstellen einer Lösung von hochmolekularen Polymerisaten konjugierter Diene in einem vinylaromatischen Kohlenwasserstoff durch anionisches Polymerisieren des Diens in Gegenwart eines Alkyllithiums als Katalysator.

Das erfindungsgemäße Verfahren ist dadurch gekennzeichnet, daß man zuerst das Dien in Lösung in einem aromatischen Kohlenwasserstoff, der frei von ethylenischen Doppelbindungen ist, bis zu einem Molgewicht M_{W} unterhalb etwa 10⁵ polymerisiert, dann ein Trialkylaluminium in molarem Überschuß gegenüber dem Alkyllithium zusetzt, die erhaltene Lösung mit der vinylaromatischen Verbindung verdünnt und dann das Polydien mit einem Polyepoxid oder einem Alkyl(meth)acrylat zu einem hochmolekularen Polymeren koppelt.

Erfindungsgemäß wird ferner ein Verfahren zum Herstellen von schlagzähen Polymerisaten vinylaromatischer Verbindungen, insbesondere von schlagzähem Polystyrol, vorgeschlagen, das darin besteht, daß man eine nach dem vorstehend beschriebenen Verfahren erhaltene Lösung, gegebenenfalls nach Zusetzen weiterer Mengen vinylaromatischer Verbindung, in an sich bekannter Weise polymerisiert.

Bei der erfindungsgemäßen anionischen Dienpolymerisation wird ein lebendes Polymeres gebildet, d. h. ein Polymeres, dessen Kettenbildung durch Verbrauch des Monomeren endet und nicht durch eine Abbruch- bzw. Deaktivierungsreaktion. Das bedeutet, daß die Polymerisation bei Zugabe weiterer Mengen an Monomerem am Kettenende fortgesetzt wird.

Die erfindungsgemäße Polymerisation von konjugiertem Dien erfolgt in Lösung in einem aromatischen Kohlenwasserstoff, zum Beispiel in Toluol, Xylol oder Ethylbenzol. Die Menge an Lösemittel sollte so bemessen sein, daß die Viskosität der entstehenden Polydienlösung niedrig genug bleibt, um eine gute Durchmischung der Reaktionslösung zu gewährleisten. Andererseits sollte die Menge an inertem Lösemittel möglichst klein gehalten werden, um den Energieaufwand für dessen Abtrennung aus dem Endprodukt gering zu halten oder die Abtrennung sogar ganz zu vermeiden. Im allgemeinen wird die Menge so bemessen, daß eine 20-40%ige, vorzugsweise 25-35%ige Polydienlösung erhalten wird.

Als konjugierte Diene werden solche mit 4-7 Kohlenstoffatomen, wie Butadien, Isopren, 2,3-Dimethyl-butadien, 1,3-Pentadien und 1,3-Hexadien, insbesondere Butadien und Isopren, bevorzugt.

Das erfindungsgemäße Verfahren ermöglicht es, bei der ersten Stufe der Dienpolymerisation durch geeignete Dosierung des Katalysators, ein Polymeres mit nicht zu hohem Molekulargewicht, etwa im Bereich unterhalb 10⁵, vorzugsweise von 10⁴ bis 10⁵, zu erhalten, dessen Lösung eine verhältnismäßig niedrige Viskosität hat, da diese exponentiell von dem Molekulargewicht des gelösten Stoffs abhängt. Mit besonderem Vorteil kann bei dieser ersten Polymerisationsstufe ein Gemisch aus Alkyllithium und Trialkylaluminium als Katalysator eingesetzt werden, wobei die molare Menge des Trialkylaluminius kleiner ist als die des Alkyllithiums, berechnet als mol Al/mol Li. Sie beträgt vorzugsweise 0,1-0,9:1. Das Trialkylaluminium wirkt als Retarder, der die katalytische Aktivität des Alkyllithiums dämpft, jedoch die Polymerisation des Diens nicht verhindert. Das Katalysatorgemisch bewirkt weiterhin, daß die gebildeten Polymerketten weniger zur Assoziatbildung neigen und damit Lösungen mit niedrigerer Viskosität bilden.

Die bei dem erfindungsgemäßen Verfahren eingesetzten Alkyllithium- und Trialkylaluminiumverbindungen enthalten bevorzugt Alkylgruppen mit 3 bis 6 Kohlenstoffatomen. Diese können geradkettig oder verzweigt sein; für die Aluminiumverbindungen werden verzweigte Alkylreste bevorzugt. Besonders bevorzugt werden C₄-Alkylreste.

In der nächsten Stufe der Polymerisatherstellung wird das Molekulargewicht durch Koppeln der Polydienanionen mit einem Kopplungsmittel, das mindestens bifunktionell mit den Polymerketten zu reagieren vermag, erhöht. Als Kopplungsmittel werden Polyepoxide oder Alkyl(meth)acrylate eingesetzt. Hierzu wird zunächst durch Zugabe von Trialkylaluminium ein molarer Überschuß von Al gegenüber Li hergestellt. Dadurch wird die katalytische Aktivität so weit herabgesetzt, daß sie zur Polymerisation von vinylaromatischen Kohlenwasserstoffen, insbesondere Styrol, nicht mehr ausreicht. Der Überschuß liegt vorzugsweise im Bereich von 1,2 bis 1,7 mol Al je mol Li. Durch Zusatz von monomerem Vinylaromaten wird dann eine verdünntere Lösung gebildet, deren Viskosität eine weitere Molekülvergrößerung durch Kopplung zuläßt. Das Kopplungsmittel soll mindestens bifunktionell sein, d. h. mindestens zwei mit dem Polymeranion reaktionsfähige Gruppen enthalten. Die (Meth)acrylate, also Acrylate oder Methacrylate, können einmal über die Estergruppen und weiterhin über die Doppelbindungen reagieren. Wie gefunden wurde, ist auch eine dreifache Kopplungsreaktion an einer (Meth)acrylsäureestergruppe möglich. Beispiele für geeignete Kopplungsmittel sind Ethylenglykoldiglycidylester, 1,4-Butandioldiglycidylester, Methylmethacrylat, n-Butylacrylat, Ethylmethacrylat, Isopropylacrylat und 1,4-Butandioldiacrylat. Allgemein werden Alkyl(meth)acrylate mit 1 bis 6 Kohlenstoffatomen in der Alkylgruppe eingesetzt. Durch das Trialkylaluminium wird zwar die Aktivität so weit erniedrigt, daß eine Polymerisation von Vinylaromaten verhindert, jedoch eine Kopplung mit den genannten aktiveren Kopplungsmitteln noch ermöglicht wird. Die Kopplungsreaktion wird bevorzugt bei erhöhter Temperatur, insbesondere im Bereich von 30-70°C durchgeführt.

Als vinylaromatische Verbindungen werden vorzugsweise niedermolekulare, also einkernige Aromaten eingesetzt, insbesondere Styrol oder substituierte Styrole, wie α-Methylstyrol, p-Methylstyrol, Ethylstyrol, tert.-Butylstyrol oder auch 1,1-Diphenylethylen; unsubstituiertes Styrol wird besonders bevorzugt.

Die bei der anionischen Dienpolymerisation und der anschließenden Kopplung erhaltene Kautschuklösung kann unmittelbar oder nach Verdünnen mit weiterer vinylaromatischer Verbindung zur Herstellung von schlagzähem vinylaromatischem Polymerisat, insbesondere von schlagzähem Polystyrol, eingesetzt werde. Die Polymerisation des Vinylaromaten kann anionisch oder radikalisch erfolgen.

Als radikalische Initiatoen kommen Peroxide, beispielsweise Diacyl-, Dialkyl-, Diarylperoxide, Peroxyester, Peroxydicarbonate, Peroxyketale, Peroxosulfate, Hydroperoxide oder Azoverbindungen in Betracht. Bevorzugt verwendet man Dibenzoylperoxid, 1,1-Di-tert.-butylperoxo-cyclohexan, Dicumylperoxid, Dilaurylperoxid und Azobisisobutyronitril.

Als Hilfsmittel können Molekulargewichtsregler wie zum Beispiel dimeres α-Methylstyrol, Mercaptane wie n-Dodecylmercaptan oder tert.-Dodecylmercaptan, Kettenverzweigungsmittel, Stabilisatoren oder Entformungsmittel zugesetzt werden.

Die Polymerisation der Matrix kann durchgehend in Masse oder in Lösung durchgeführt werden. Die Polymerisation erfolgt in der Regel bei Temperaturen zwischen 50 und 200°C, bevorzugt zwischen 90 und 150°C im Falle der radikalischen Polymerisation, bzw. zwischen 20 und 180°C, bevorzugt zwischen 30 und 80°C im Falle der anionischen Polymerisation. Die Reaktionsführung kann isotherm oder auch adiabatisch erfolgen.

Die folgenden Beispiele erläutern bevorzugte Ausführungsformen des erfindungsgemäßen Verfahrens. Alle Arbeiten wurden unter Stickstoff, entweder in Schlenktechnik oder in einer Glovebox durchgeführt. Das als Lösemittel eingesetzte Toluol wurde, ebenso wie die Monomeren Butadien und Styrol, zur Reinigung unter Stickstoff über Aluminiumoxid-Perlen geleitet. Das sek.-Butyllithium wurde als kühl gelagerte 1,5 molare Lösung in Cyclohexan/Hexan-Gemisch (Chemetall); das Triisobutylaluminium als handelsübliche 1 molare Lösung in Toluol (Aldrich Chem. Co.) eingesetzt.

Das Polybutadienyl-Lithium wurde in Gegenwart eines Überschusses an Triisobutylaluminium und Styrol als Lösemittelkomponente gekoppelt. Dabei wurde wie folgt vorgegangen:

2300 ml (2000 g) Toluol wurden in einem 6 Liter fassenden Glasreaktor mit Rückflußkühler vorgelegt und mit 0,3 ml Diphenylethylen versetzt. Die Lösung wurde auf 40°C erwärmt und mit sek.-Butyllithium-Lösung bis zum Farbumschlag auf gelb/orange titriert. Die Lösung wurde dann auf 6°C Außentemperatur erwärmt und mit 11,5 ml (17,2 mmol) sek.-Butyllithium-Lösung initiiert. Dann wurden 857 g (15,9 mol; ca. 1320 ml) Butadien unter entsprechendem Überdruck innerhalb von 40 Minuten zulaufen gelassen, wobei die Temperatur auf maximal 68°C anstieg. 2 Stunden 20 Minuten nach Ende des Butadienzulaufs wurden 10 ml (Probe 1) abgenommen und zum Abbruch der Reaktion mit 1 Tropfen Ethanol versetzt. Anschließend wurden der Mischung 29,2 ml (29,2 mmol) Triisobutylaluminiumlösung zugesetzt. Danach wurden 3150 ml Styrol zulaufen gelassen und 30 Minuten gerührt. Ein Teil der Polymerlösung wurde in einem mit Stickstoff gespülten Zweihalskolben abgefüllt und in die Glovebox eingeschleust. Von der Polymerlösung wurden jeweils 20 g in 50 ml-Ampullen abgefüllt und verschlossen. Die Ampullen wurden aus der Glovebox ausgeschleust und im Wasserbad auf 60°C temperiert. Das Kopplungsmittel 1,4-Butandioldiglycidylether (0,25 mol/mol Li) wurde über Einwegspritzen zugegeben und die Kopplung eine Stunde nach der Zugabe mit 0,2 ml Ethanol abgebrochen (Probe 2).

Probe 1 war nach GPC-Analyse monomodal verteilt mit M_{W} = 64900 g/mol und Mₙ = 63400 g/mol. Probe 2 wies einen weiteren Peak mit einem Flächenanteil von 36% auf, der einem Kopplungsprodukt mit einem Molekulargewicht von 132.220 g/mol entsprach. Für die Probe insgesamt betrugen M_{W} = 88900 g/mol und Mₙ = 77090.

In der folgenden Tabelle 1 sind für die Beispiele 1 bis 15 und die Vergleichsbeispiele 1 bis 3 die Daten und Ergebnisse der Kopplung von Polybutadienyl-Anionen bei 60°C in Gegenwart von Triisobutylaluminium und sek.-Butyllithium im Molverhältnis 1,7:1 (Al:Li) in Rollrandflaschen zusammengestellt. Mit D ist das Verhältnis von M_{W} zu Mₙ bezeichnet.

In der vorletzten Spalte ist die Anzahl der Peaks im GPC-Diagramm angegeben; die Kopplungsausbeute bedeutet das Verhältnis der Fläche unter einem Peak zur Gesamtfläche in Prozent.

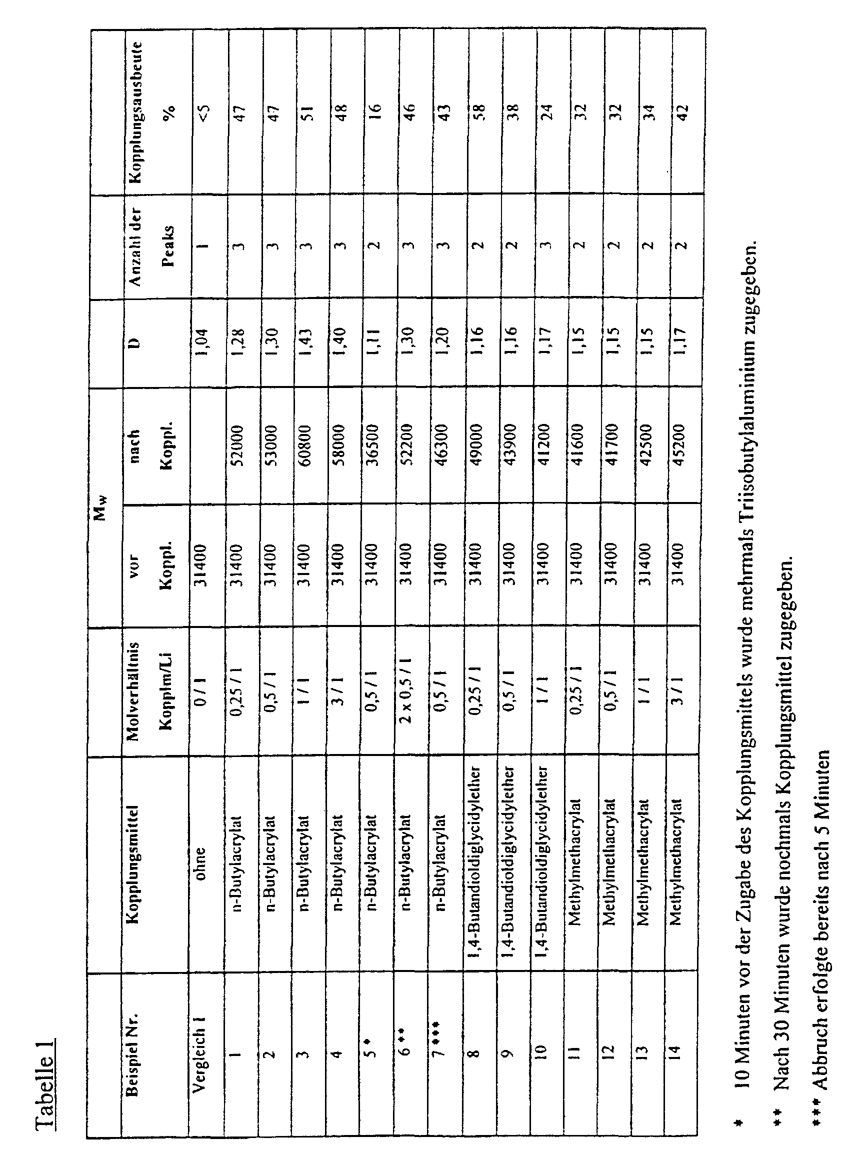

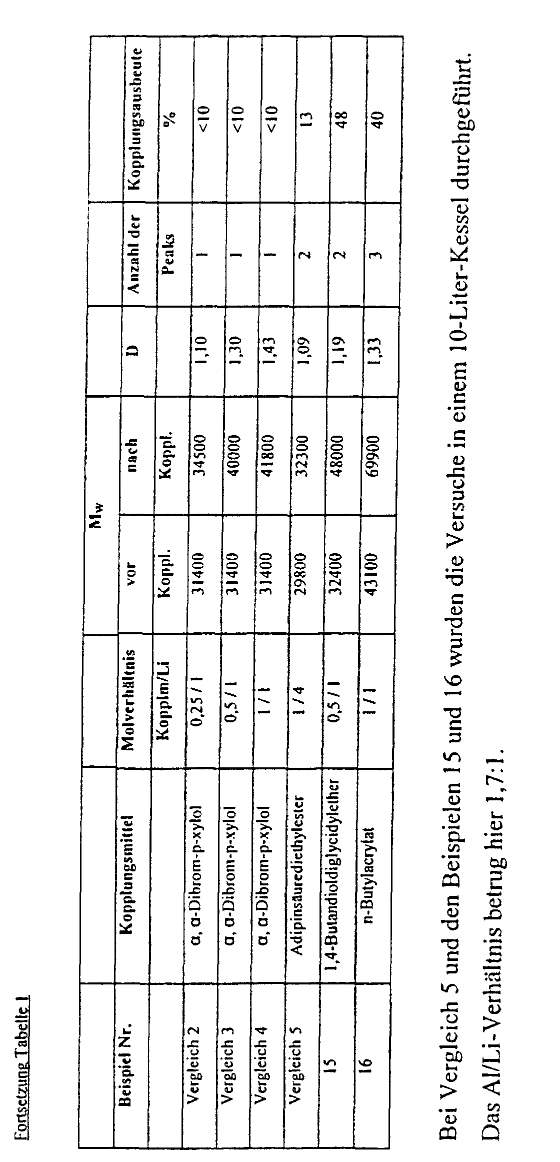

In der Tabelle 2 sind für die Beispiele 15 bis 24 und das Vergleichsbeispiel 5 die Daten der Kopplung wie in Tabelle 1 angegeben. Hier war aber das Verhältnis Al/Li auf 1,2:1 abgesenkt.

In Tabelle 3 sind die Daten für die Beispiele 28 bis 32 und die Vergleichsbeispiele 7 bis 12 angegeben. Hier werden die Ergebnisse von Kopplungen mit Polystyryl-Anionen gezeigt. Das Al/Li-Verhältnis betrug wieder 1,7:1.

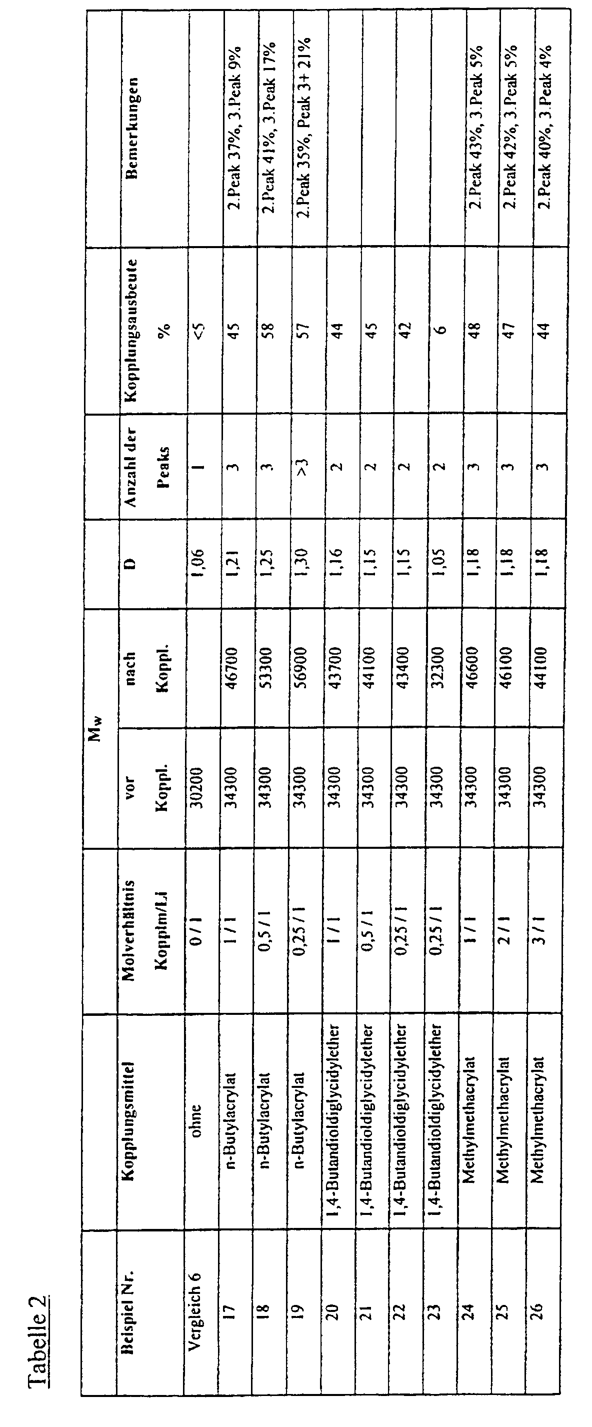

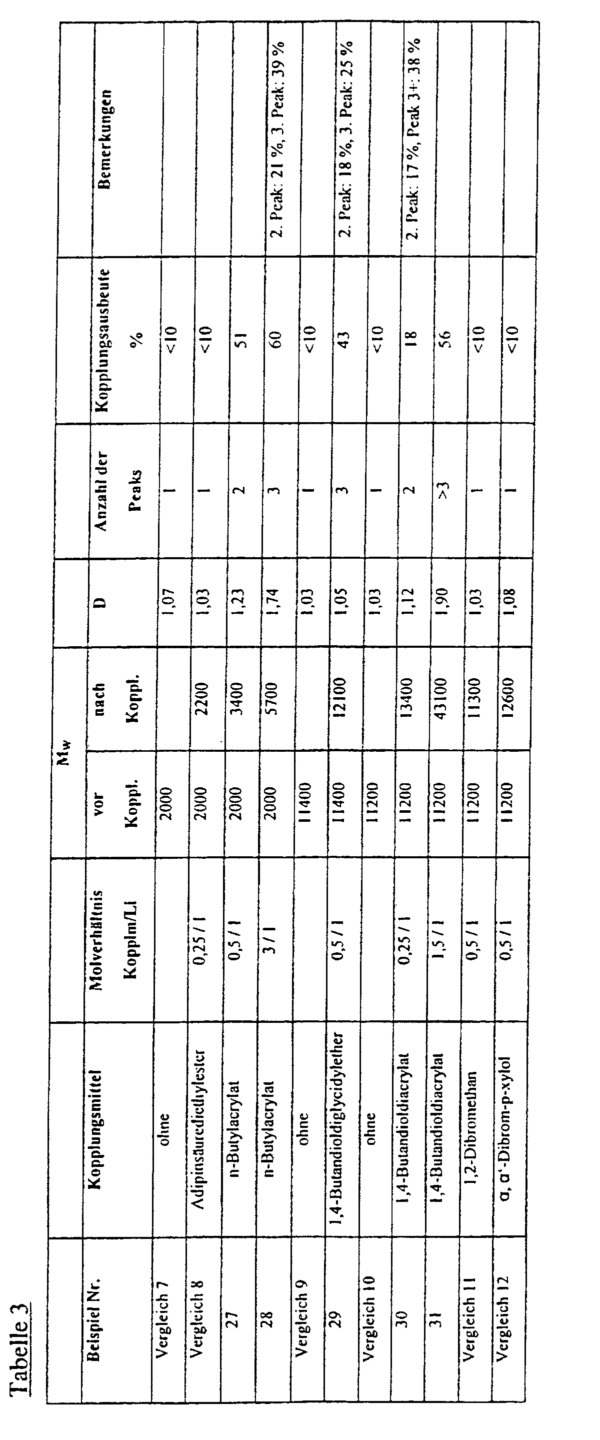

## Patentansprüche

1. Verfahren zum Herstellen einer Lösung von hochmolekularen Polymerisaten konjugierter Diene in einem vinylaromatischen Kohlenwasserstoff durch anionisches Polymerisieren des Diens in Gegenwart eines Alkyllithiums als Katalysator, **dadurch gekennzeichnet, daß** man zuerst das Dien in Lösung in einem aromatischen Kohlenwasserstoff der frei von ethylenischen Doppelbindungen ist, bis zu einem Molgewicht M_{W} unterhalb etwa 10⁵ polymerisiert, dann ein Trialkylaluminium in molarem Überschuß gegenüber dem Alkyllithium zusetzt, die erhaltene Lösung mit der vinylaromatischen Verbindung verdünnt und dann das Polydien mit einem Polyepoxid oder einem Alkyl(meth)acrylat zu einem hochmolekularen Polymeren koppelt.

2. Verfahren nach Anspruch 1, **dadurch gekennzeichnet, daß** man die erste Polymerisationsstufe in Gegenwart eines Katalysators durchführt, der neben Alkyllithium ein Trialkylaluminium in einer molaren Menge enthält, die kleiner ist als die des Alkyllithiums.

3. Verfahren nach Anspruch 1, **dadurch gekennzeichnet, daß** man als aromatischen Kohlenwasserstoff Ethylbenzol oder Toluol einsetzt.

4. Verfahren nach Anspruch 1, **dadurch gekennzeichnet, daß** man den aromatischen Kohlenwasserstoff in solcher Menge zusetzt, daß die Lösung nach der Polymerisation 20 - 40 Gew.-% Dienpolymerisat enthält.

5. Verfahren nach Anspruch 1, **dadurch gekennzeichnet, daß** man als Katalysator eine Alkyllithium- oder Alkylaluminiumverbindung mit 3 bis 6 Kohlenstoffatomen in der Alkylgruppe einsetzt.

6. Verfahren nach Anspruch 5, **dadurch gekennzeichnet, daß** die Alkylaluminiumverbindung verzweigte Alkylgruppen aufweist.

7. Verfahren nach Anspruch 1, **dadurch gekennzeichnet, daß** man als Polyepoxid ein Diepoxid einsetzt.

8. Verfahren nach Anspruch 1, **dadurch gekennzeichnet, daß** man als Alkyl(meth)acrylat eine Verbindung mit 1 bis 6 Kohlenstoffatomen in der Alkylgruppe einsetzt.

9. Verfahren nach Anspruch 1, **dadurch gekennzeichnet, daß** man als konjugiertes Dien Butadien oder Isopren einsetzt.

10. Verfahren nach Anspruch 1, **dadurch gekennzeichnet, daß** man die Kopplung des Polydiens bei einer Temperatur im Bereich von 30 - 70°C durchführt.

11. Verfahren nach Anspruch 1, **dadurch gekennzeichnet, daß** man als vinylaromatische Verbindung Styrol oder ein substituiertes Styrol einsetzt.

12. Verfahren zum Herstellen von schlagzähen Polymerisaten vinylaromatischer Verbindungen, **dadurch gekennzeichnet, daß** man eine nach dem Verfahren eines der Ansprüche 1 bis 10 erhaltene Lösung, gegebenenfalls nach Zusetzen von weiteren Mengen vinylaromatischer Verbindung, in an sich bekannter Weise polymerisiert.

## Claims

1. A process for preparing a solution of high molecular weight polymers of conjugated dienes in a vinylaromatic hydrocarbon by anionic polymerization of the diene in the presence of an alkyllithium as catalyst, wherein the diene is firstly polymerized in solution in an aromatic hydrocarbon which is free of ethylenic double bonds to a molecular weight M_{w} below about 10⁵, a trialkylaluminum is then added in a molar excess relative to the alkyllithium, the solution obtained is diluted with the vinylaromatic compound and the polydiene is then coupled with a polyepoxide or an alkyl (meth)acrylate to give a high molecular weight polymer.

2. A process as claimed in claim 1, wherein the first polymerization stage is carried out in the presence of a catalyst comprising alkyllithium together with a trialkylaluminum in a molar amount which is smaller than that of the alkyllithium.

3. A process as claimed in claim 1, wherein the aromatic hydrocarbon used is ethyl benzene or toluene.

4. A process as claimed in claim 1, wherein the aromatic hydrocarbon is added in such an amount that the solution after the polymerization contains 20 - 40% by weight of diene polymer.

5. A process as claimed in claim 1, wherein an alkyllithium or alkylaluminum compound having from 3 to 6 carbon atoms in the alkyl group is used as catalyst.

6. A process as claimed in claim 5, wherein the alkylaluminum compound has branched alkyl groups.

7. A process as claimed in claim 1, wherein a diepoxide is used as polyepoxide.

8. A process as claimed in claim 1, wherein an alkyl (meth)acrylate having from 1 to 6 carbon atoms in the alkyl group is used.

9. A process as claimed in claim 1, wherein the conjugated diene used is butadiene or isoprene.

10. A process as claimed in claim 1, wherein the coupling of the polydiene is carried out at 30 - 70°C.

11. A process as claimed in claim 1, wherein the vinylaromatic compound used is styrene or a substituted styrene.

12. A process for preparing impact-modified polymers of vinylaromatic compounds, which comprises polymerizing a solution obtained by a process as claimed in any of claims 1 to 10, if desired after addition of further amounts of vinylaromatic compound, in a manner known per se.

## Revendications

1. Procédé pour préparer une solution de polymères de masse moléculaire élevée de diènes conjugués dans un hydrocarbure vinylaromatique au moyen de la polymérisation anionique du diène en présence d'un alkyllithium en tant que catalyseur, **caractérisé en ce que** l'on polymérise dans un premier temps le diène en solution dans un hydrocarbure aromatique, qui ne présente pas de doubles liaisons éthyléniques, jusqu'à une masse moléculaire Mₘ inférieure à environ 10⁵, puis que l'on ajoute un trialkylaluminium en excès molaire par rapport à l'alkyllithium, que l'on dilue la solution obtenue avec le composé vinylaromatique puis que l'on couple le polydiène avec un polyépoxyde ou un (méth)acrylate d'alkyle pour former un polymère de masse moléculaire élevée.

2. Procédé selon la revendication 1, **caractérisé en ce que** l'on réalise la première étape de polymérisation en présence d'un catalyseur qui contient, outre l'alkyllithium, un triaklylaluminium dans une quantité molaire qui est inférieure à celle de l'alkyllithium.

3. Procédé selon la revendication 1, **caractérisé en ce que** l'on met en oeuvre, en tant qu'hydrocarbure aromatique, l'éthylbenzène ou le toluène.

4. Procédé selon la revendication 1, **caractérisé en ce que** l'on met en oeuvre l'hydrocarbure aromatique dans une quantité telle que la solution contient 20% à 40% en poids de polymère de diène après la polymérisation.

5. Procédé selon la revendication 1, **caractérisé en ce que** l'on met en oeuvre, en tant que catalyseur, un composé alkyllithium ou alkylaluminium possédant 3 à 6 atomes de carbone dans le groupe alkyle.

6. Procédé selon la revendication 5, **caractérisé en ce que** le composé alkylaluminium présente des groupes alkyle ramifiés.

7. Procédé selon la revendication 1, **caractérisé en ce que** l'on met en oeuvre, en tant que polyépoxyde, un diépoxyde.

8. Procédé selon la revendication 1, **caractérisé en ce que** l'on met en oeuvre, en tant que (méth)acrylate d'alkyle, un composé possédant 1 à 6 atomes de carbone dans le groupe alkyle.

9. Procédé selon la revendication 1, **caractérisé en ce que** l'on met en oeuvre, en tant que diène conjugué, le butadiène ou l'isoprène.

10. Procédé selon la revendication 1, **caractérisé en ce que** l'on réalise le couplage du polydiène à une température allant de 30°C à 70°C.

11. Procédé selon la revendication 1, **caractérisé en ce que** l'on met en oeuvre, en tant que composé vinylaromatique, le styrène ou un styrène substitué.

12. Procédé pour préparer des polymères résilients de composés vinylaromatiques, **caractérisé en ce que** l'on polymérise, de manière connue en soi, une solution selon le procédé de l'une quelconque des revendications 1 à 10, éventuellement après avoir ajouté des quantités supplémentaires de composé vinylaromatique.
